# EUROPEAN PATENT SPECIFICATION

(11) **EP 3 401 448 B1**
(45) Date of publication and mention of the grant of the patent: **17.04.2024**
(21) Application number: 18000427.7
(22) Date of filing: 04.05.2018
(51) Int. Cl.: E03C 1/04

(54) **A WATER OUTLET TERMINAL WITH THE FUNCTION OF PURIFIED WATER OUTLET**
WASSERAUSLASSANSCHLUSS MIT DER FUNKTION EINES REINWASSERAUSLASSES
TERMINAL DE SORTIE D'EAU AVEC LA FONCTION DE SORTIE D'EAU PURIFIÉE

(30) Priority: 08.05.2017 CN 201710317591
(43) Date of publication of application: 14.11.2018
(73) Proprietor: Xiamen Solex High-tech Industries Co., Ltd., 361000 Fujian (CN)
(72) Inventor: CAO, Yongbin, Fujian, 361000 (CN); Wang, Mingnan, Fujian, 361000 (CN); SHI, Hao, Fujian, 361000 (CN); Zhou, Quanbing, Fujian, 361000 (CN)
(74) Representative: Verscht, Thomas Kurt Albert

(56) References cited:
- EP-A1- 3 023 161
- WO-A1-2004/063478
- WO-A1-2017/062224
- US-A- 5 858 215
- US-A1- 2009 211 654
- US-A1- 2016 186 416

## Description

### Technical field

The present invention relates to a water outlet device, and more particularly to a water outlet device having two water outlet modes of raw water and purified water.

### Background technique

In the prior art, the pull-type faucet used in the kitchen needs to set complex waterway structure in the pull-type faucet if the two water outlet modes of purified water and raw water are to be realized, and the purified water switch and and the raw water switch are also designed on the faucet at the same time. When the purified water switch is turned on, the user needs to turn off the raw water switch, otherwise, the raw water and the purified water may be discharged at the same time. Therefore, in the prior art, the purified water switch and the raw water switch are designed in linkage. When the purified water switch is turned on, the raw water switch is automatically turned off. This structure is very complicated. In addition, in the prior art, the purified water cavity and the raw water cavity are disposed on both sides of the mandrel, respectively, and the thickness of the mandrel is limited. Therefore, the volumes of the two water cavities also become smaller . In this way, the flow in the water cavity becomes smaller. When the water pressure is low, the water flow in the water cavity is also relatively small, which is likely to cause the water outlet flow at the water outlet terminal to be small and the water outlet stability at the end of the water outlet terminal to be relatively worse.

With regard to the prior art attention is drawn to WO 2017/062224 A1 from which a filtration system for a pull-down or pull-out faucet is known, the filtration system including a multi-channel hose configured to fluidly couple to a spray head, a water filter configured to provide filtered water, and a diverter-equipped T-connector. The T -connector has a first branch configured to receive un-filtered water from a valve cartridge of the faucet, a second branch con-figured to receive filtered water from the water filter, and a third branch con-figured to deliver filtered and unfiltered water from the first and second branches to different channels of the multi-channel hose. The spray head also includes an activation switch configured to allow selective output of filtered and unfiltered water from the spray head. The spray head features different channels for filtered and unfiltered water, and a purified water outlet passage is provided in the geometric center of a cover assembly.

From WO 2004/063478 A1 a head apparatus for an aqueduct capable of classifying water supplied through the aqueduct into original water and purified water is known, which allows users to selectively use water as shower water or foaming water, thereby improving convenience of use, expanding a life span of the filter and saving management cost for the filter. The head apparatus is fixedly connected to an aqueduct and includes a handle section having a first end connected to the aqueduct and accommodating a filter housing having a filter member therein in a non-contact manner, a head section connected to the handle section in order to allow purified water or original water to flow therethrough, a water path switching unit coupled to the head section for selectively discharging original water or purified water, and a water-status switching unit coupled to the head section at a lower portion of the water path switching unit in order to change a status of original water or purified water into foaming water or shower water.

Further, from US 2016/0186416 A1 a multi-function water output device including a shell, a water ejection head and a core body connected to each other in the shell is known. On the core body is provided with a first valve hole, a second valve hole, and a third valve hole disposed in sequence along a water flow direction from rear to front. Rear end of the core body is provided with an outer interface, while inside the outer interface is provided with an inner interface. An inner cavity of the inner interface is in communication with a first water input port at bottom of a first valve hole. An upper portion of the first valve hole is provided with first water output port. In the first valve hole is provided with a first valve plug, controlling connection and disconnection of the first water input port and the first water output port.

From EP 3 023 161 A1 a fluid control valve including a body, a first diverter, and a second diverter is known. The body includes an inlet that receives a supply of fluid, and first, second and third chambers. The first diverter is movable between first and second positions. When the first diverter is in the second position, the first chamber is fluidly connected to the inlet and the second chamber is fluidly disconnected from the inlet. When the first diverter is in the first position, the second chamber is fluidly connected to the inlet and the first chamber is fluidly disconnected from the inlet. The second diverter is movable between first and second positions. When the second diverter is in the second position, the third chamber is fluidly connected to the second chamber. When the second diverter is in the first position, the third chamber is fluidly disconnected from the second chamber.

Further, from US 5 858 215 A the combination of a water filter and a display for indication of the water filter condition including an electrical circuit connected to the display and responsive to use of the water filter is known. The circuit includes a microcontroller, a timer connected to the microcontroller and providing timing signals thereto, and a switch connected to the microcontroller and responsive to the flow of water from the filter to cause the microcontroller to process the timing signals. The microcontroller is program med to utilize the timing signals to provide an electrical signal to the display indicative of filter condition.

Furthermore, from US 2009/211654 A1 an assembly for the differential delivery of treated and mains water is known, the assembly comprising a flexible hose for the separate conveyance of treated water and mains water for connection between a spray head provided with at least two separate delivery points and a distribution unit for the separate supply of treated water and mains water. The flexible hose has, at its ends, respectively a first connection port, for connection to the distribution unit, the second port being connectable to the distribution unit so as to allow free rotation about the axis of the second port.

### Content of the invention

The main technical problem to be solved by the present invention is to provide a water outlet terminal which has two water outlet modes of raw water and purified water, and the switching structure of raw water and purified water is simple.

In order to solve the above technical problem, the present invention provides a water outlet terminal with a function of purified water outlet, comprising a body and a mandrel disposed in the body, an end surface of the mandrel is provided with a raw water outlet hole and a purified water outlet hole;
the mandrel is provided with a raw water inlet cavity and a purified water inlet cavity which are independent of each other;
one end of the raw water inlet cavity and the purified water inlet cavity is communicated with the raw water outlet hole and the purified water outlet hole, respectively, and the other end is a raw water inlet hole and a purified water inlet hole; the water outlet terminal is further provided with a purified water opening member which is switched between a first position and a second position so that the purified water inlet hole is in the open state or closed state;
further comprising a cover assembly, wherein a purified water outlet passage is provided in the geometric center of the cover assembly for communication with the fluid in the purified water inlet cavity,
wherein each of the raw water inlet cavity and the purified water inlet cavity are provided, on the same side of the mandrel, with a respective open end, wherein the open ends are provided along the water flow direction, the rest of the raw water inlet cavity and purified water inlet cavity is a sealing portion, the periphery of the open ends is welded to a weld tab to seal the open ends.

In a preferred embodiment: the side of the purified water inlet cavity away from the raw water inlet cavity is further provided with a second open end, and the second open end is welded and sealed with a second weld tab.

In a preferred embodiment: the raw water inlet hole is always in a normally open state, that is that only after a faucet water inlet switch is closed, a raw water waterway can be closed.

In a preferred embodiment: the raw water outlet hole comprises at least two water outlet holes with different outlet forms.

In a preferred embodiment: the raw water outlet hole comprises a first water outlet hole and a second water outlet hole; the second water outlet hole is arranged on the periphery of the first water outlet the hole and concentric with the first water outlet hole.

In a preferred embodiment: the purified water outlet is arranged at the center of the first water outlet hole.

In a preferred embodiment: the first water outlet hole is a bubble water outlet, and a aerator is arranged at the bubble water outlet hole.

In a preferred embodiment: a raw water switching member for switching the water outlet water form of the raw water; and when the raw water switching member is operated, one of the first water outlet hole and the second water outlet hole is in an open state and the other is in a sealed state.

In a preferred embodiment: the side of the mandrel facing away from the raw water inlet cavity and the purified water inlet cavity is provided with a first installation hole for installing the raw water switching member;
the raw water switching member comprises a key and a first switching shaft; the first switching shaft is disposed between the raw water inlet cavity and the raw water outlet hole through the first installation hole; the key is connected with a fulcrum, the two ends of the key are pressing ends one of the pressing ends is interlocked with an end of the first switching shaft exposed outside the first installation hole so as to drive the first switching shaft to move so that one of the first water outlet hole and the second water outlet hole is communicated with the raw water inlet cavity ,the other end is sealed from the raw water inlet cavity.

In a preferred embodiment: the purified water opening member is one of a mechanical switch, a touch switch and a remote control switch.

In a preferred embodiment: the mandrel is further provided with a second installation holes on the same side with the first installation hole;
the purified water opening member comprises a button and a second switching shaft; the second switching shaft is disposed between the purified water inlet hole and the purified water inlet cavity through the second installation hole; the button is arranged in linkage with the second switching shaft through a ball-point pen mechanism; and pressing the button drives the second switching shaft to switch between the first position and the second position; the outer periphery of the second switching shaft is provided with a first sealing ring and a second sealing ring arranged coaxially with the second switching shaft and the areas of the first sealing ring and the second sealing ring are the same ; when the purified water opening member is in the second position, the first sealing ring and the second sealing ring are respectively located in both sides of the purified water inlet hole and close the purified water inlet hole .

In a preferred embodiment: a flexible water inlet pipe; the water inlet pipe comprises a raw water inlet pipe and a purified water inlet pipe which are coaxially nested and are respectively communicated with the raw water inlet hole and the purified water inlet hole .

In a preferred embodiment: a raw water opening member separately provided from the water outlet terminal, the raw water opening member controls the water flow in the raw water inlet pipe to open or close; so that the raw water opening member and the purified water opening member are independent from each other.

In a preferred embodiment: a three-way valve; the three-way valve is provided with a raw water interface and a purified water interface, and which are provided with the raw water introducing cavity and the purified water introducing cavity independent of each other; both ends of the raw water introducing cavity are respectively connected with the raw water interface and the raw water inlet pipe; both ends of the purified water introducing cavity are respectively connected with the purified water interface and the purified water inlet pipe .

Compared with the prior art, the present invention has the following beneficial effects:
1. The invention provides a water outlet terminal with the function of purified water outlet, which has two water outlet modes of raw water and purified water. And the raw water switch and purified water switch are independent of each other, the raw water waterway keep normally open, only after the faucet water inlet switch is closed ,the raw water waterway can be closed. The purified water open member is set in the water terminal. The user can operate the purified water open member to open and close the purified water waterway, which has nothing to do with the switching of the raw water waterway, thus achieving the separation of the two waterway operations. Users are not prone to misuse during use.
2. The present invention provides a water outlet terminal with a function of purified water outlet. The raw water outlet hole and the purified water outlet hole are coaxially arranged, so that the raw water inlet cavity and the purified water inlet cavity are arranged on the same side of the mandrel; therefore , the open ends of the raw water inlet cavity and the purified water inlet cavity along the water flow direction are also on the same side, so that the open end can be sealed by using a weld tab after the mandrel is formed. However, in the traditional mandrel, the open ends of the raw water cavity and the purified water cavity are respectively arranged on two sides of the mandrel, that is, two pieces of weld tabs are required to be welded. Therefore, the technical solution of the present invention has a simpler structure, fewer parts and less processing requirements.
3. The present invention provides a water outlet terminal with the function of purified water outlet. The structure of the mandrel maximizes the space of the raw water inlet cavity and the purified water inlet cavity, which is favorable for increasing the flow rate of the water outlet. If the raw water inlet cavity and the purified water inlet cavity are set on both sides of the mandrel ,it will cause the waterway to be complex, the water space to become smaller, resulting in increased tube resistance, the water flow at the water outlet terminal will be reduced when the water pressure is low, lower the use stability of the water outlet terminal.
4. The invention provides a water outlet terminal with the function of purified water outlet, which adopts the structure of the pipe in the pipe and realizes both the raw water inlet and the purified water inlet.
5. The present invention provides a water outlet terminal with the function of purified water outlet, and also has a raw water switching member, so that the raw water outlet water can be switched in the shower water or the bubble water through the raw water switching member, further increasing the function of the water outlet terminal.
6. The present invention provides a water outlet terminal with the function of purified water outlet, and the purified water outlet hole is arranged at the center of the water outlet surface without occupying the position of the raw water outlet. As a result, the water outlet holes are concentrically arranged, the overall appearance is beautiful, the shape of the raw water outlet is also relatively complete, avoiding the occupation of the purified water outlet hole and making the relative incompleteness of the outlet water form.

### BRIEF DESCRIPTION OF THE DRAWINGS

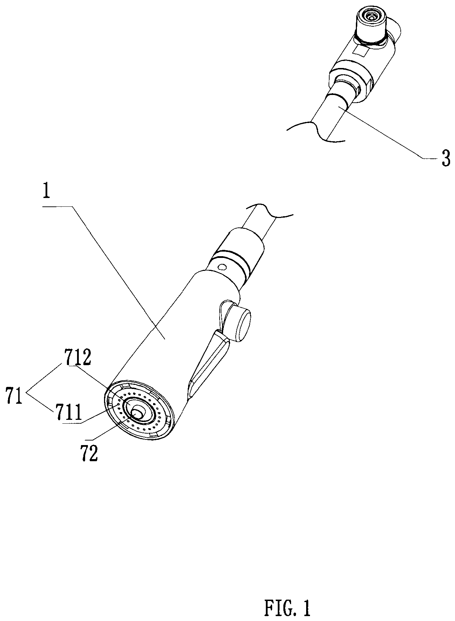

Figure 1 is a perspective view of a water outlet terminal according to a preferred embodiment of the present invention;

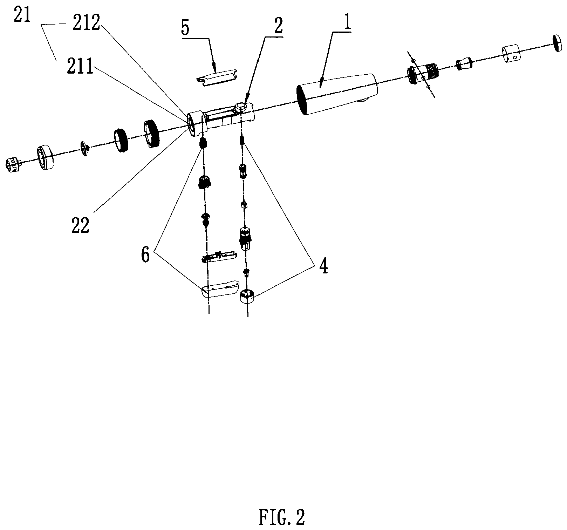

Figure 2 is a structural exploded view of the core components of the water outlet terminal according to a preferred embodiment of the present invention;

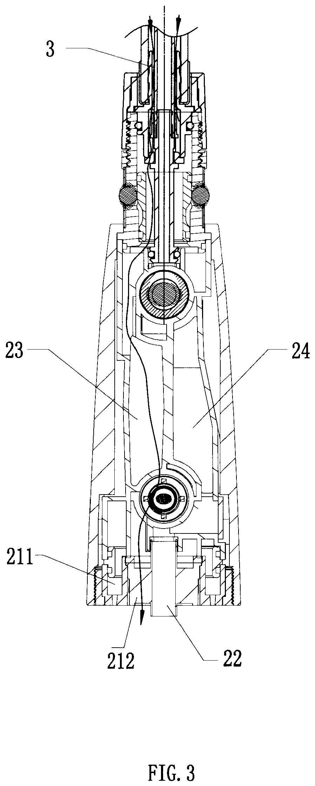

Figure 3 is a waterway diagram of the water outlet terminal when discharging raw water according to a preferred embodiment of the present invention;

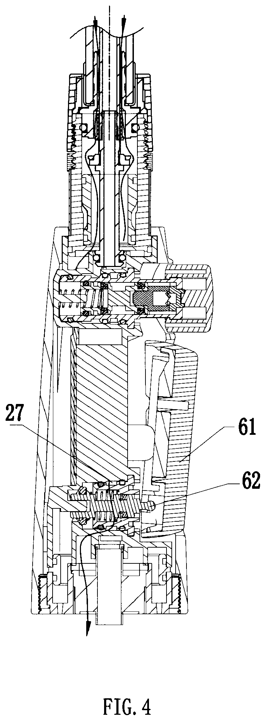

Figure 4 is a schematic diagram of the internal structure of the water outlet terminal when discharge raw water according to a preferred embodiment of the present invention;

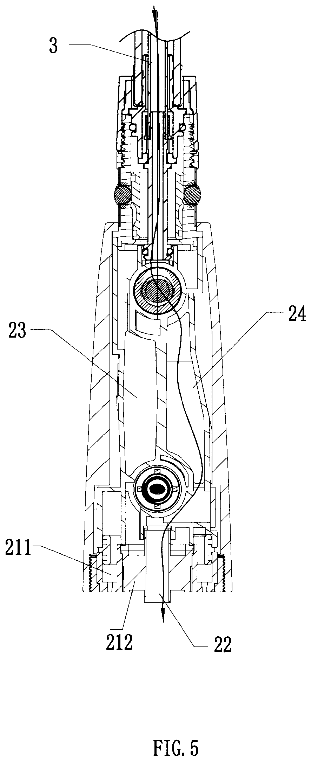

Figure 5 is a schematic view of the waterway of the water outlet terminal when discharging purified water according to a preferred embodiment of the present invention;

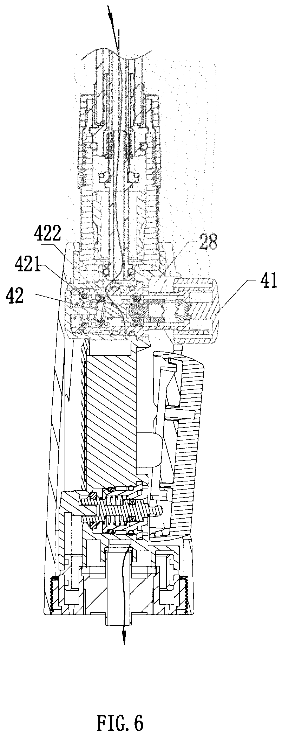

Figure 6 is a schematic diagram of the internal structure of the water outlet terminal when discharging purified water according to a preferred embodiment of the present invention;

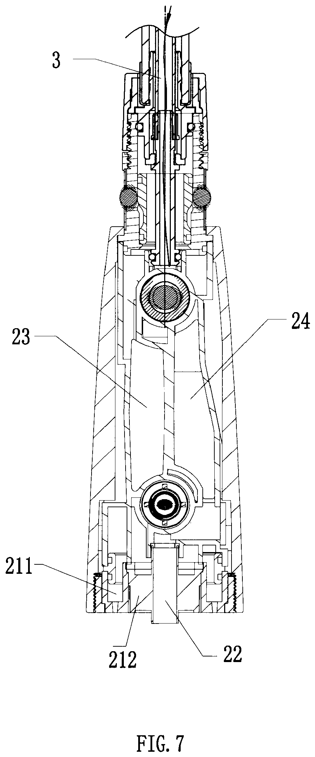

Figure 7 is a waterway diagram of the outlet terminal when purified water is closed according to a preferred embodiment of the present invention;

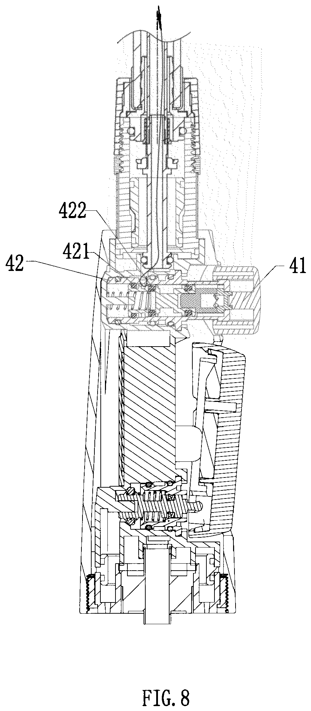

Figure 8 is a schematic diagram of the internal structure of the outlet terminal when the purified water is closed according to a preferred embodiment of the present invention;

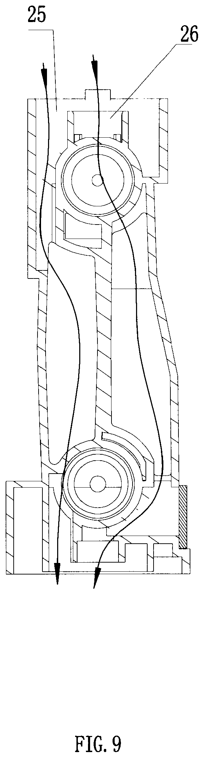

Figure 9 is a waterway diagram of the mandrel according to a preferred embodiment of the present invention;

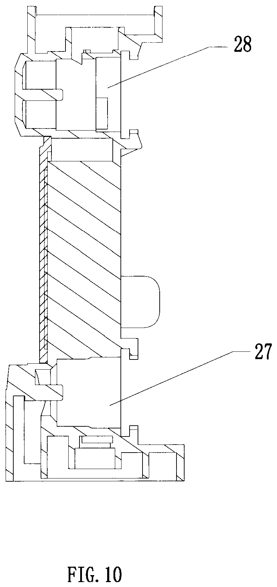

Figure 10 is a cross-sectional view of the mandrel according to a preferred embodiment of the present invention;

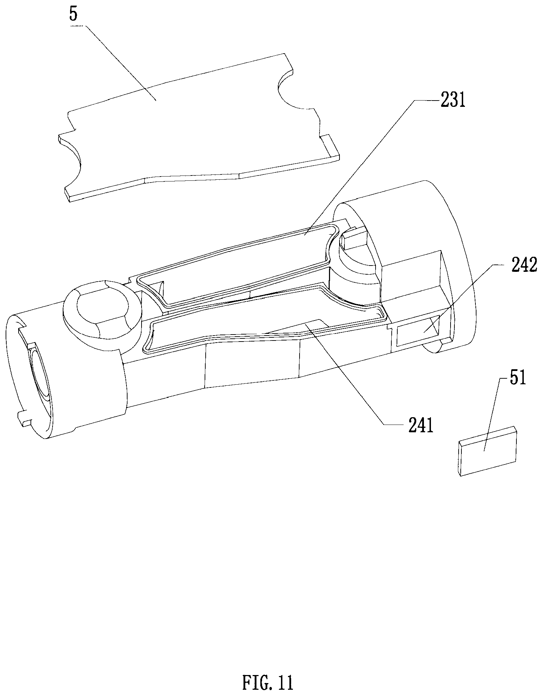

Figure 11 is a schematic view of a welding sealing of the mandrel according to a preferred embodiment of the present invention.
Figure 12 is a schematic view of a traditional kitchen pullout faucet after taking out the water outlet shower and the water inlet hose.
Figure 13 is another perspective view of the water outlet terminal according to a preferred embodiment of the present invention;
Figure 14 is a schematic diagram of the combination of the figure 12 and the figure 13.

### detailed description

The technical solutions of the present invention are further described below with reference to the accompanying drawings and specific embodiments.

Referring to 1-11, a water outlet terminal with the function of purified water outlet includes a body 1 and a mandrel 2 disposed in the body 1. The end surface of the mandrel 2 is coaxially provided with a raw water outlet hole 21 and a purified water outlet Hole 22;
The mandrel 2 is provided with a raw water inlet cavity 23 and a purified water inlet cavity 24 on the same side; one end of the raw water inlet cavity 23 and the purified water inlet cavity 24 communicate with the raw water outlet hole 21 and the purified water outlet hole 22, the other end is the raw water inlet hole 25 and the purified water inlet hole 26;
Further comprising a water inlet pipe 3 ,the water inlet pipe 3 comprises a raw water inlet pipe and a purified water inlet pipe nested in a coaxial manner, and respectively communicated with the raw water inlet hole 25 and the purified water inlet hole 26. Wherein the raw water inlet hole 25 is always in communication with the raw water inlet pipe; and a purified water opening member 4 is disposed between the purified water inlet hole 26 and the purified water inlet cavity 24, and the purified water opening member 4 is switching between the first position and the second position ,so that the purified water inlet hole 26 and the purified water inlet cavity 24 are in an open communication state or an isolated closed state.

In this embodiment, the water outlet terminal is a kitchen pull-out faucet, which is merely an example in this embodiment. Those skilled in the art may apply the above structure to other water outlet terminals, which is a simple replacement of the present embodiment.

Therefore, one of the above water outlet terminals with the function of purified water outlet has two water outlet modes of raw water and purified water. And, because the raw water waterway remains normally open, you can turn off the faucet water inlet switch to close the raw water waterway. While the purified water open member 4 of the purified water is set in the water outlet terminal. The user can operate the purified water open member to open and close the purified water waterway, which has nothing to do with the switching of the raw water waterway, thus achieving the separation of the two waterway operations. Users are not prone to misuse during use.

At the same time, since the raw water outlet hole 21 and the purified water outlet hole 22 are coaxially arranged, the raw water inlet cavity 23 and the purified water inlet cavity 24 may be disposed on the same side of the mandrel 2. Therefore, the open ends 231 and 241 of the raw water inlet cavity 23 and the purified water inlet cavity 24 along the water flow direction are also on the same side, in this way, the mandrel 2 can seal the open ends 231, 241 with only one weld tab 5 after the molding . However, in the traditional mandrel, the open ends of the raw water cavity and the purified water cavity are respectively arranged on two sides of the mandrel, that is, two pieces of welding pieces are required to be welded. Therefore, the above technical solution is simpler in structure, less in parts and less in processing requirements.

Moreover, the above structure of the mandrel 2 maximizes the space of the raw water inlet cavity 23 and the purified water inlet cavity 24, which is favorable for increasing the flow rate of the water outlet. If the raw water inlet cavity and the purified water inlet cavity are set on both sides of the mandrel ,it will cause the waterway to be complex, and the water space to become smaller, resulting in increased tube resistance, the water flow at the water outlet terminal will be reduced when the water pressure is lower, lower the use stability of the water outlet terminal.

The side of the purified water inlet cavity 24 away from the raw water inlet cavity 23 is further provided with a second open end 242 and through the second open end 242 the mandrel corresponds to part of the core, thereby forming a water passage cavity extending in a direction substantially perpendicular to the longitudinal direction of the mandrel. The second open end 242 is welded and sealed with the second weld tab 51, so that the purified water can finally be discharged from the center of the mandrel.

In addition, in order to further increase the function of the pull-out faucet, the raw water outlet hole 21 includes at least two water outlet holes with different outlet forms. In this embodiment, the raw water outlet hole 21 includes a shower water outlet hole 211 and a bubble water outlet hole 212. The shower water outlet hole 211 is disposed on the outer periphery of the bubble water outlet hole 212 and concentrically arranged with the bubble water outlet hole 212. According to other needs, raw water is not limited to the shape of water shower and bubble water above, you can also set the other forms of water. As long as there are two different forms of the water outlet effect, it is within the scope of the present invention.

The purified water outlet hole 22 is disposed at the center of the bubble water outlet hole 212. The end of the mandrel is fixedly connected with a cover assembly 7, and comprises a hollow water outlet cover and a double channel aerator. The shower water outlet hole 211, the bubble water outlet hole 212 and the purified water outlet hole 22 are respectively connected with the water outlet cover 711, the outer channel 712 of the double channel aerator, the inner channel 72 of the double channel aerator. Therefore, the purified water flows out of the inner channel of the double channel aerator, and the raw water flow through the outer channel of the aerator forms bubble water outlet and the water that does not flow through the aerator forms a normal shower water.

In order to facilitate the user to switch between the two raw water outlet forms, a raw water switch member 6 for switching the raw water outlet form is also included; when the raw water switch member 6 is operated, one of the shower water outlet hole 211 and the bubble water outlet hole 212 is open and the other is sealed. In order to achieve the water flow switching conveniently.

The specific structure is as follows: the side of the mandrel 2 facing away from the raw water inlet cavity 23 and the purified water inlet cavity 24 is provided with a first installation hole 27 for installing the raw water switching member 6 ;
The raw water switching member 6 includes a key 61 and a first switching shaft 62; the first switching shaft 62 is disposed between the raw water inlet cavity 23 and the raw water outlet hole 21 through the first installation hole 27; the key 61 is connected to a fulcrum. The two ends of the key 61 is pressing ends. One of the pressing ends is disposed in conjunction with the end of the first switching shaft 62 exposed outside the first installation hole 27 so as to drive the first switching shaft 62 to move, and then one of the shower water outlet hole 211 and the bubble water outlet hole 212 is communicated with the raw water inlet cavity 23 and the other is sealed and separated from the raw water inlet cavity 23.

In this embodiment, the mandrel 2 is further provided with a second installation hole 28 for installing the purified water open member 4 on the same side as the first installation hole 27;
The purified water opening member 4 includes a button 41 and a second switching shaft 42; the second switching shaft 42 is disposed between the purified water inlet hole 26 and the purified water inlet cavity 24 through the second installation hole 28; The button 41 is interlocked with the second switching shaft 42 via a ball-point pen mechanism. Pressing the button 41 drives the second switching shaft 42 to cycle switch between the first position and the second position, the outer periphery of the second switching shaft 42 is provided with two first sealing ring 421 and second sealing ring 422 coaxially with the second switching shaft 42 ; and the areas of the first sealing ring 421 and the second sealing ring 422 are the same; and when the purified water opening member 4 is in the second position, the first sealing ring 421 and the second sealing ring 422 are respectively located at two sides of the purified water inlet hole 26 to close the purified water opening member 4 . Since the areas of the first sealing ring 421 and the second sealing ring 422 are the same, when in the second position, the water pressures received by the first sealing ring 421 and the second sealing ring 422 are equal to each other in magnitude and opposite in direction. Therefore, the user presses the button 41 to switch from the second position to the first position, only the elastic force of the spring in the ball-point pen mechanism needs to be overcome, the switching force is relatively small, and the switching feel is good.

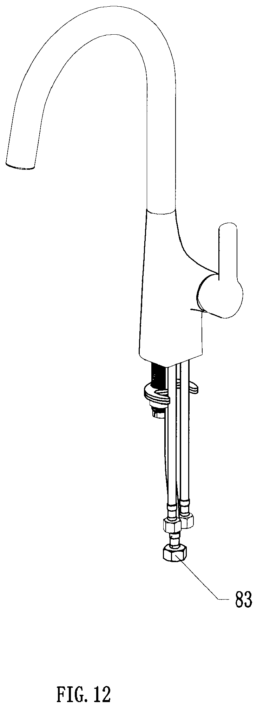

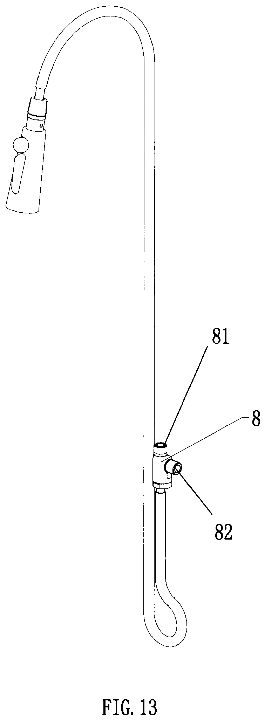

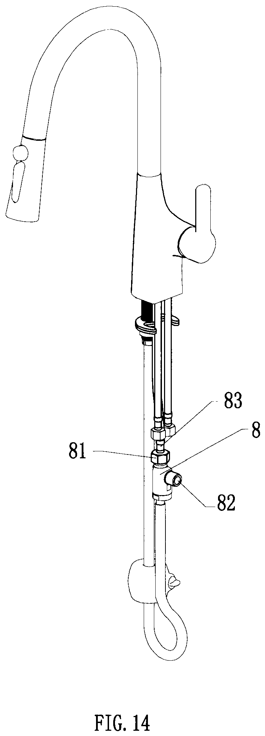

Referring to fig.12-14, in this embodiment, the water outlet terminal also includes a three-way valve 8; the three-way valve 8 is provided with a raw water interface 81 and a purified water interface 82, and is provided therein with a raw water introducing cavity and a purified water introducing cavity independent of each other. The two ends of the raw water introducing cavity are respectively connected with the raw water interface and the raw water inlet pipe, and both ends of the purified water introducing cavity are respectively connected with the purified water interface and the purified water inlet pipe. The raw water interface 81 may be connected to the faucet mixed water outlet end 83, and the purified water interface 82 may be connected to the faucet mixed water outlet end 83, and the purified water interface 82 may be connected to the water outlet end of the water purifier. And because the raw water open member is the faucet water inlet switch. Therefore only need to replace the outlet water faucet and the water inlet hose of the existing pull-out faucet with the water outlet terminal of the present invention to complete the conversion of ordinary faucet to the faucet with purified water and raw water. Therefore, the versatility of the present invention is relatively strong and convenient to replace.

The foregoing descriptions are merely preferred embodiments of the present invention.

The invention is defined in the appended claims.

## Claims

1. A water outlet terminal with a function of purified water outlet, comprising: a body (1) and a mandrel (2) disposed in the body (1), an end surface of the mandrel (2) is provided with a raw water outlet hole (21) and a purified water outlet hole (22);
the mandrel (2) is provided with a raw water inlet cavity (23) and a purified water inlet cavity (24) which are independent of each other;
one end of the raw water inlet cavity (23) and the purified water inlet cavity (24) is communicated with the raw water outlet hole (21) and the purified water outlet hole (22), respectively, and the other end is a raw water inlet hole (25) and a purified water inlet hole (26); the water outlet terminal is further provided with a purified water opening member (4) which is switched between a first position and a second position so that the purified water inlet hole (26) is in the open state or closed state;
further comprising a cover assembly (7), wherein a purified water outlet passage is provided in the geometric center of the cover assembly (7) for communication with the fluid in the purified water inlet cavity (24),
wherein each of the raw water inlet cavity (23) and the purified water inlet cavity (24) are provided, on the same side of the mandrel, with a respective open end (231, 241), wherein the open ends (231, 241) are provided along the water flow direction, the rest of the raw water inlet cavity (23) and purified water inlet cavity (24) is a sealing portion, the periphery of the open ends is welded to a weld tab (5) to seal the open ends.

2. The water outlet terminal with the function of purified water outlet according to claim 1, further comprising: the side of the purified water inlet cavity (24) away from the raw water inlet cavity (23) is further provided with a second open end (242), and the second open end (242) is welded and sealed with a second weld tab (51).

3. The water outlet terminal with the function of purified water outlet according to any one or more of claims 1 to 2, further comprising: the raw water inlet hole (25) is always in a normally open state, that is that only after a faucet water inlet switch is closed, a raw water waterway can be closed.

4. The water outlet terminal with the function of purified water outlet according to any one or more of claims 1 to 3, further comprising: the raw water outlet hole (21) comprises at least two water outlet holes with different outlet forms.

5. The water outlet terminal with the function of purified water outlet according to claim 4, further comprising: the raw water outlet hole (21) comprises a first water outlet hole and a second water outlet hole; the second water outlet hole is arranged on the periphery of the first water outlet the hole and concentric with the first water outlet hole.

6. The water outlet terminal with the function of purified water outlet according to claim 4 and/or 5, further comprising: the purified water outlet is arranged at the center of the first water outlet hole.

7. The water outlet terminal with the function of purified water outlet according to any one or more of claims 4 to 6, further comprising: the first water outlet hole is a bubble water outlet, and an aerator is arranged at the bubble water outlet hole.

8. The water outlet terminal with the function of purified water outlet according to any one or more of claims 4 to 7, further comprising: a raw water switching member (6) for switching the water outlet water form of the raw water; and when the raw water switching member (6) is operated, one of the first water outlet hole and the second water outlet hole is in an open state and the other is in a sealed state.

9. The water outlet terminal with the function of purified water outlet according to any one or more of claims 4 to 8, further comprising: the side of the mandrel (2) facing away from the raw water inlet cavity (23) and the purified water inlet cavity (24) is provided with a first installation hole for installing the raw water switching member (6);
the raw water switching member (6) comprises a key (61) and a first switching shaft (62); the first switching shaft (62) is disposed between the raw water inlet cavity (23) and the raw water outlet hole (21) through the first installation hole; the key (61) is connected with a fulcrum, the two ends of the key (61) are pressing ends, one of the pressing ends is interlocked with an end of the first switching shaft (62) exposed outside the first installation hole so as to drive the first switching shaft (62) to move so that one of the first water outlet hole and the second water outlet hole is communicated with the raw water inlet cavity (23), the other end is sealed from the raw water inlet cavity (23).

10. The water outlet terminal with the function of purified water outlet according to any one or more of claims 1 to 9, further comprising: the purified water opening member (4) is one of a mechanical switch, a touch switch and a remote control switch.

11. The water outlet terminal with the function of purified water outlet according to claim 9 and/or 10, further comprising: the mandrel (2) is further provided with a second installation holes on the same side with the first installation hole;
the purified water opening member (4) comprises a button and a second switching shaft (42); the second switching shaft (42) is disposed between the purified water inlet hole (26) and the purified water inlet cavity (24) through the second installation hole; the button is arranged in linkage with the second switching shaft (42) through a ball-point pen mechanism; and pressing the button drives the second switching shaft (42) to switch between the first position and the second position; the outer periphery of the second switching shaft (42) is provided with a first sealing ring and a second sealing ring arranged coaxially with the second switching shaft (42) and the areas of the first sealing ring and the second sealing ring are the same; when the purified water opening member (4) is in the second position, the first sealing ring and the second sealing ring are respectively located in both sides of the purified water inlet hole (26) and close the purified water inlet hole (26).

12. The water outlet terminal with the function of purified water outlet according to any one or more of claims 1 to 11, further comprising: a flexible water inlet pipe; the water inlet pipe comprises a raw water inlet pipe and a purified water inlet pipe which are coaxially nested and are respectively communicated with the raw water inlet hole (25) and the purified water inlet hole (26).

13. The water outlet terminal with the function of purified water outlet according to claim 12, further comprising: a raw water opening member separately provided from the water outlet terminal, the raw water opening member controls the water flow in the raw water inlet pipe to open or close; so that the raw water opening member and the purified water opening member (4) are independent from each other.

14. The water outlet terminal with the function of purified water outlet according to claim 12 and/or 13, further comprising: a three-way valve (8); the three-way valve (8) is provided with a raw water interface (81) and a purified water interface (82), and which are provided with the raw water introducing cavity and the purified water introducing cavity independent of each other; both ends of the raw water introducing cavity are respectively connected with the raw water interface (81) and the raw water inlet pipe; both ends of the purified water introducing cavity are respectively connected with the purified water interface (82) and the purified water inlet pipe.

## Patentansprüche

1. Ein Wasserauslassendstück mit einer Funktion zum Auslassen von aufbereitetem Wasser, das folgendes aufweist: einen Körper (1) und einen Dorn (2), der in dem Körper (1) angeordnet ist, eine Endoberfläche des Dorns (2) ist mit einem Rohwasserauslassloch (21) und einem Auslassloch (22) für aufbereitetes Wasser vorgesehen;
der Dorn (2) ist mit einem Rohwassereinlasshohlraum (23) und einem Einlasshohlraum (24) für aufbereitetes Wasser vorgesehen, welche voneinander unabhängig sind;
ein Ende des Rohwassereinlasshohlraums (23) und des Einlasshohlraums (24) für aufbereitetes Wasser stehen jeweils mit dem Rohwasserauslassloch (21) und dem Auslassloch (22) für aufbereitetes Wasser in Verbindung, und das andere Ende ist ein Rohwassereinlassloch (25) und ein Einlassloch (26) für aufbereitetes Wasser; das Wasserauslassendstück ist ferner mit einem Öffnungsglied (4) für aufbereitetes Wasser versehen, welches zwischen einer ersten Position und einer zweiten Position geschaltet wird, so dass das Einlassloch (26) für aufbereitetes Wasser in dem geöffneten Zustand oder geschlossenen Zustand ist;
ferner aufweisend eine Abdeckungsanordnung (7), wobei ein Auslassdurchlass für aufbereitetes Wasser in der geometrischen Mitte der Abdeckungsanordnung (7) zur Verbindung mit dem Strömungsmittel in dem Einlasshohlraum (24) für aufbereitetes Wasser vorgesehen ist,
wobei jeder von dem Rohwassereinlasshohlraum (23) und dem Einlasshohlraum (24) für aufbereitetes Wasser auf derselben Seite des Dorns mit einem jeweiligen offenen Ende (231, 241) vorgesehen ist, wobei die offenen Enden (231, 241) entlang der Wasserströmungsrichtung vorgesehen sind, der Rest des Rohwassereinlasshohlraums (23) und des Einlasshohlraums (24) für aufbereitetes Wasser ist ein Dichtungsteil, der Umfang der offenen Enden ist an eine Schweißlasche (5) verschweißt, um die offenen Enden abzudichten.

2. Das Wasserauslassendstück mit der Funktion zum Auslassen von aufbereitetem Wasser nach Anspruch 1, ferner aufweisend: die Seite des Einlasshohlraums (24) für aufbereitetes Wasser, die von dem Rohwassereinlasshohlraum (23) entfernt ist, ist ferner mit einem zweiten offenen Ende (242) versehen, und das zweite offene Ende (242) ist mit einer zweiten Schweißlasche (51) verschweißt und abgedichtet.

3. Das Wasserauslassendstück mit der Funktion zum Auslassen von aufbereitetem Wasser nach einem oder mehreren der Ansprüche 1 bis 2, ferner aufweisend: das Rohwassereinlassloch (25) ist immer in einem normalerweise offenen Zustand, das heißt, dass nur nachdem ein Hahnwassereinlassschalter geschlossen ist, kann ein Rohwasser-Wasserweg geschlossen werden.

4. Das Wasserauslassendstück mit der Funktion zum Auslassen von aufbereitetem Wasser nach einem oder mehreren der Ansprüche 1 bis 3, ferner aufweisend: das Rohwasserauslassloch (21) weist wenigstens zwei Wasserauslasslöcher mit unterschiedlichen Auslassformen auf.

5. Das Wasserauslassendstück mit der Funktion zum Auslassen von aufbereitetem Wasser nach Anspruch 4, ferner aufweisend: das Rohwasserauslassloch (21) weist ein erstes Wasserauslassloch und ein zweites Wasserauslassloch auf; das zweite Wasserauslassloch ist am Umfang des ersten Wasserauslasslochs und konzentrisch zu dem ersten Wasserauslassloch angeordnet.

6. Das Wasserauslassendstück mit der Funktion zum Auslassen von aufbereitetem Wasser nach Anspruch 4 und/oder 5, ferner aufweisend: der Auslass für aufbereitetes Wasser ist bei der Mitte des ersten Wasserauslasslochs angeordnet.

7. Das Wasserauslassendstück mit der Funktion zum Auslassen von aufbereitetem Wasser nach einem oder mehreren der Ansprüche 4 bis 6, ferner aufweisend: das erste Wasserauslassloch ist ein Blasenwasserauslass, und ein Strahlregler ist an dem Blasenwasserauslassloch angeordnet.

8. Das Wasserauslassendstück mit der Funktion zum Auslassen von aufbereitetem Wasser nach einem oder mehreren der Ansprüche 4 bis 7, ferner aufweisend: ein Rohwasserschaltglied (6) zum Schalten der Wasserauslasswasserform des Rohwassers; und wenn das Rohwasserschaltglied (6) betätigt wird, ist eines von dem ersten Wasserauslasslochs und dem zweiten Wasserauslassloch in einem offenen Zustand und das andere ist in einem abgedichteten Zustand.

9. Das Wasserauslassendstück mit der Funktion zum Auslassen von aufbereitetem Wasser nach einem oder mehreren der Ansprüche 4 bis 8, ferner aufweisend: die Seite des Dorns (2), die von dem Rohwassereinlasshohlraum (23) weg weist, und der Einlasshohlraum (24) für aufbereitetes Wasser ist mit einem ersten Installationsloch zum Installieren des Rohwasserschaltglieds (6) versehen;
das Rohwasserschaltglied (6) weist eine Taste (61) und eine erste Schaltwelle (62) auf; die erste Schaltwelle (62) ist zwischen dem Rohwassereinlasshohlraum (23) und dem Rohwasserauslassloch (21) durch das erste Installationsloch angeordnet; die Taste (61) ist mit einem Drehpunkt verbunden, die zwei Enden der Taste (61) sind Druckenden, eines der Druckenden ist mit einem Ende der ersten Schaltwelle (62) verriegelt, das außerhalb des ersten Installationslochs freiliegt, um die erste Schaltwelle (62) zum Bewegen anzutreiben, so dass eines von dem ersten Wasserauslassloch und dem zweiten Wasserauslassloch mit dem Rohwassereinlasshohlraum (23) in Verbindung steht, das andere Ende ist von dem Rohwassereinlasshohlraum (23) abgedichtet.

10. Das Wasserauslassendstück mit der Funktion zum Auslassen von aufbereitetem Wasser nach einem oder mehreren der Ansprüche 1 bis 9, ferner aufweisend: das Öffnungsglied (4) für aufbereitetes Wasser ist eines von einem mechanischen Schalter, einem Berührungsschalter und einem Fernsteuerungsschalter.

11. Das Wasserauslassendstück mit der Funktion zum Auslassen von aufbereitetem Wasser nach Anspruch 9 und/oder 10, ferner aufweisend: der Dorn (2) ist ferner mit einem zweiten Installationsloch auf derselben Seite mit dem ersten Installationsloch vorgesehen;
das Öffnungsglied (4) für aufbereitetes Wasser weist einen Knopf und eine zweite Schaltwelle (42) auf; die zweite Schaltwelle (42) ist zwischen dem Einlassloch (26) für aufbereitetes Wasser und dem Einlasshohlraum (24) für aufbereitetes Wasser durch das zweite Installationsloch angeordnet; der Knopf ist in Verbindung mit der zweiten Schaltwelle (42) durch einen Kugelschreibermechanismus angeordnet; und Drücken des Knopfes treibt die zweite Schaltwelle (42) an, um zwischen der ersten Position und der zweiten Position zu schalten; der Außenumfang der zweiten Schaltwelle (42) ist mit einem ersten Dichtungsring und einem zweiten Dichtungsring versehen, die koaxial mit der zweiten Schaltwelle (42) angeordnet sind und die Flächen des ersten Dichtungsrings und des zweiten Dichtungsrings sind die gleichen; wenn das Öffnungsglied (4) für aufbereitetes Wasser in der zweiten Position ist, sind der erste Dichtungsring und der zweite Dichtungsring jeweils in beiden Seiten des Einlasslochs (26) für aufbereitetes Wasser angeordnet und schließen das Einlassloch (26) für aufbereitetes Wasser.

12. Das Wasserauslassendstück mit der Funktion zum Auslassen von aufbereitetem Wasser nach einem oder mehreren der Ansprüche 1 bis 11, ferner aufweisend: ein flexibles Wassereinlassrohr; das Wassereinlassrohr weist ein Rohwassereinlassrohr und ein Einlassrohr für aufbereitetes Wasser auf, welche koaxial geschachtelt sind und jeweils mit dem Rohwassereinlassloch (25) und dem Einlassloch (26) für aufbereitetes Wasser in Verbindung stehen.

13. Das Wasserauslassendstück mit der Funktion zum Auslassen von aufbereitetem Wasser nach Anspruch 12, ferner aufweisend: ein Rohwasseröffnungsglied, das separat von dem Wasserauslassendstück vorgesehen ist, das Rohwasseröffnungsglied steuert die Wasserströmung in dem Rohwassereinlassrohr zum Öffnen oder Schließen; so dass das Rohwasseröffnungsglied und das Öffnungsglied (4) für aufbereitetes Wasser unabhängig voneinander sind.

14. Das Wasserauslassendstück mit der Funktion zum Auslassen von aufbereitetem Wasser nach Anspruch 12 und/oder 13, ferner aufweisend: ein Dreiwegeventil (8); das Dreiwegeventil (8) ist mit einer Rohwasserschnittstelle (81) und einer Schnittstelle (82) für aufbereitetes Wasser versehen, und welche mit dem Rohwassereinführhohlraum und dem Einführhohlraum für aufbereitetes Wasser vorgesehen sind, die voneinander unabhängig sind; beide Enden des Rohwasser-Einführhohlraums sind jeweils mit der Rohwasserschnittstelle (81) und dem Rohwassereinlassrohr verbunden; beide Enden des Einführhohlraums für aufbereitetes Wasser sind jeweils mit der Schnittstelle (82) für aufbereitetes Wasser und dem Einlassrohr für aufbereitetes Wasser verbunden.

## Revendications

1. Terminaison de sortie d'eau ayant une fonction de sortie d'eau purifiée, comprenant : un corps (1) et un mandrin (2) disposé dans le corps (1), une surface d'extrémité du mandrin (2) est dotée d'un trou de sortie d'eau brute (21) et d'un trou de sortie d'eau purifiée (22) ;
le mandrin (2) est doté d'une cavité d'entrée d'eau brute (23) et d'une cavité d'entrée d'eau purifiée (24) qui sont indépendantes l'une de l'autre ;
une extrémité de la cavité d'entrée d'eau brute (23) et de la cavité d'entrée d'eau purifiée (24) est en communication avec le trou de sortie d'eau brute (21) et le trou de sortie d'eau purifiée (22), respectivement, et l'autre extrémité est un trou d'entrée d'eau brute (25) et un trou d'entrée d'eau purifiée (26) ; la terminaison de sortie d'eau est en outre dotée d'un organe d'ouverture d'eau purifiée (4) qui est commuté entre une première position et une deuxième position de sorte que le trou d'entrée d'eau purifiée (26) est dans l'état ouvert ou l'état fermé ;
comprenant en outre un ensemble couvercle (7), dans laquelle un passage de sortie d'eau purifiée est disposé au centre géométrique de l'ensemble couvercle (7) pour communiquer avec le fluide dans la cavité d'entrée d'eau purifiée (24),
dans laquelle chacune de la cavité d'entrée d'eau brute (23) et de la cavité d'entrée d'eau purifiée (24) est dotée, sur le même côté du mandrin, d'une extrémité ouverte respective (231, 241), dans laquelle
les extrémités ouvertes (231, 241) sont disposées le long de la direction d'écoulement d'eau, le reste de la cavité d'entrée d'eau brute (23) et de la cavité d'entrée d'eau purifiée (24) constitue une partie d'étanchéité, la périphérie des extrémités ouvertes est soudée à une patte à souder (5) pour étanchéifier les extrémités ouvertes.

2. Terminaison de sortie d'eau ayant la fonction de sortie d'eau purifiée selon la revendication 1, comprenant en outre : le côté de la cavité d'entrée d'eau purifiée (24) éloigné de la cavité d'entrée d'eau brute (23) est en outre doté d'une deuxième extrémité ouverte (242), et la deuxième extrémité ouverte (242) est soudée et étanchéifiée avec une deuxième patte à souder (51).

3. Terminaison de sortie d'eau ayant la fonction de sortie d'eau purifiée selon l'une ou plusieurs des revendications 1 à 2, comprenant en outre : le trou d'entrée d'eau brute (25) est toujours dans un état normalement ouvert, c'est-à-dire que seulement après la fermeture d'un commutateur d'entrée d'eau du robinet, une voie d'eau brute peut être fermée.

4. Terminaison de sortie d'eau ayant la fonction de sortie d'eau purifiée selon l'une ou plusieurs des revendications 1 à 3, comprenant en outre : le trou de sortie d'eau brute (21) comprend au moins deux trous de sortie d'eau avec des formes de sortie différentes.

5. Terminaison de sortie d'eau ayant la fonction de sortie d'eau purifiée selon la revendication 4, comprenant en outre : le trou de sortie d'eau brute (21) comprend un premier trou de sortie d'eau et un deuxième trou de sortie d'eau ; le deuxième trou de sortie d'eau est disposé sur la périphérie du premier trou de sortie d'eau et concentrique au premier trou de sortie d'eau.

6. Terminaison de sortie d'eau ayant la fonction de sortie d'eau purifiée selon la revendication 4 et/ou 5, comprenant en outre : la sortie d'eau purifiée est disposée au centre du premier trou de sortie d'eau.

7. Terminaison de sortie d'eau ayant la fonction de sortie d'eau purifiée selon l'une ou plusieurs des revendications 4 à 6, comprenant en outre : le premier trou de sortie d'eau est une sortie d'eau à bulles, et un aérateur est agencé au niveau du trou de sortie d'eau à bulles.

8. Terminaison de sortie d'eau ayant la fonction de sortie d'eau purifiée selon l'une ou plusieurs des revendications 4 à 7, comprenant en outre : un organe de commutation d'eau brute (6) pour commuter la forme d'eau de sortie d'eau de l'eau brute ; et lorsque l'organe de commutation d'eau brute (6) est actionné, l'un du premier trou de sortie d'eau et du deuxième trou de sortie d'eau est dans un état ouvert et l'autre est dans un état étanchéifié.

9. Terminaison de sortie d'eau ayant la fonction de sortie d'eau purifiée selon l'une ou plusieurs des revendications 4 à 8, comprenant en outre : le côté du mandrin (2) faisant face à l'opposé de la cavité d'entrée d'eau brute (23) et de la cavité d'entrée d'eau purifiée (24) est doté d'un premier trou d'installation pour installer l'organe de commutation d'eau brute (6) ;
l'organe de commutation d'eau brute (6) comprend une clé (61) et un premier arbre de commutation (62) ; le premier arbre de commutation (62) est disposé entre la cavité d'entrée d'eau brute (23) et le trou de sortie d'eau brute (21) à travers le premier trou d'installation ; la clé (61) est reliée à un point d'appui, les deux extrémités de la clé (61) sont des extrémités de pression, l'une des extrémités de pression est verrouillée mutuellement avec une extrémité du premier arbre de commutation (62) exposée à l'extérieur du premier trou d'installation de manière à entraîner le premier arbre de commutation (62) à se déplacer de telle sorte que l'un du premier trou de sortie d'eau ou du deuxième trou de sortie d'eau est en communication avec la cavité d'entrée d'eau brute (23) ; l'autre extrémité est étanchéifiée vis-à-vis de la cavité d'entrée d'eau brute (23).

10. Terminaison de sortie d'eau ayant la fonction de sortie d'eau purifiée selon l'une ou plusieurs des revendications 1 à 9, comprenant en outre : l'organe d'ouverture d'eau purifiée (4) est l'un d'un commutateur mécanique, d'un commutateur tactile et d'un commutateur télécommandé.

11. Terminaison de sortie d'eau ayant la fonction de sortie d'eau purifiée selon la revendication 9 et/ou 10, comprenant en outre : le mandrin (2) est en outre doté d'un deuxième trou d'installation sur le même côté que le premier trou d'installation ;
l'organe d'ouverture d'eau purifiée (4) comprend un bouton et un deuxième arbre de commutation (42) ; le deuxième arbre de commutation (42) est disposé entre le trou d'entrée d'eau purifiée (26) et la cavité d'entrée d'eau purifiée (24) à travers le deuxième trou d'installation ; le bouton est disposé en liaison avec le deuxième arbre de commutation (42) par l'intermédiaire d'un mécanisme de type stylo à bille ; et le fait d'appuyer sur le bouton entraîne le deuxième arbre de commutation (42) à commuter entre la première position et la deuxième position ; la périphérie externe du deuxième arbre de commutation (42) est dotée d'un premier anneau d'étanchéité et d'un deuxième anneau d'étanchéité disposés coaxialement avec le deuxième arbre de commutation (42) et les superficies du premier anneau d'étanchéité et du deuxième anneau d'étanchéité sont identiques ; lorsque l'organe d'ouverture d'eau purifiée (4) est dans la deuxième position, le premier anneau d'étanchéité et le deuxième anneau d'étanchéité sont respectivement situés des deux côtés du trou d'entrée d'eau purifiée (26) et ferment le trou d'entrée d'eau purifiée (26).

12. Terminaison de sortie d'eau ayant la fonction de sortie d'eau purifiée selon l'une ou plusieurs des revendications 1 à 11, comprenant en outre : un tuyau d'entrée d'eau flexible ; le tuyau d'entrée d'eau comprend un tuyau d'entrée d'eau brute et un tuyau d'entrée d'eau purifiée qui sont emboîtés coaxialement et communiquent respectivement avec le trou d'entrée d'eau brute (25) et le trou d'entrée d'eau purifiée (26) .

13. Terminaison de sortie d'eau ayant la fonction de sortie d'eau purifiée selon la revendication 12, comprenant en outre : un organe d'ouverture d'eau brute disposé séparément de la terminaison de sortie d'eau, l'organe d'ouverture d'eau brute commande l'écoulement d'eau dans le tuyau d'entrée d'eau brute à ouvrir ou fermer ; de telle sorte que l'organe d'ouverture d'eau brute et l'organe d'ouverture d'eau purifiée (4) sont indépendants l'un de l'autre.

14. Terminaison de sortie d'eau ayant la fonction de sortie d'eau purifiée selon la revendication 12 et/ou 13, comprenant en outre : une vanne à trois voies (8) ; la vanne à trois voies (8) est dotée d'une interface d'eau brute (81) et d'une interface d'eau purifiée (82), et qui sont dotées de la cavité d'introduction d'eau brute et de la cavité d'introduction d'eau purifiée indépendantes l'une de l'autre ; les deux extrémités de la cavité d'introduction d'eau brute sont respectivement reliées à l'interface d'eau brute (81) et au tuyau d'entrée d'eau brute ; les deux extrémités de la cavité d'introduction d'eau purifiée sont respectivement reliées à l'interface d'eau purifiée (82) et au tuyau d'entrée d'eau purifiée.
